# EUROPEAN PATENT APPLICATION

(11) **EP 1 676 487 A1**
(43) Date of publication of application: **05.07.2006**
(21) Application number: 05252572.2
(22) Date of filing: 25.04.2005
(51) Int. Cl.: A23L 1/00, A23P 1/16, A23L 1/24, A23G 1/00, A23C 19/076

(54) **Method and system for controlling the density of aerated food products**

(30) Priority: 29.12.2004 US 23498
(71) Applicant: KRAFT FOODS HOLDINGS, INC., Northfield, Illinois 60093 (US)
(72) Inventor: Schwimmer, William H., Evanston, Illinois 60201 (US); Topinka, John B., Evanston, Illinois 60202 (US); Hartliep, Barbara B., Lake Forest, Illinois 60045 (US)
(74) Representative: Smaggasgale, Gillian Helen

(57) **Abstract**

Method and system for controlling the density to a predetermined level of an edible aerated foodstuff product during the preparation thereof A density measurement is acquired on the aerated product at a location sufficiently downstream of a shearing unit used to form the aerated material such that the product is in an equilibrated state. Consequently an adjustment can be made in the introduction rate of aeration gas at a location upstream of the shearing unit which is calculated to reduce any difference between the predetermined and measured product densities in a precise and reliable manner. Also, injection gas of reduced solubility may be used so that product density can reach equilibrium sooner. Upstream disturbances in the density of a formulation starter material also may be monitored and countered by adjustments made in the gas flow rate to assist in maintaining a desired product density.

## Description

### Field of the Invention

This invention relates to a method and system for controlling product density, and particularly, a method and system for controlling finished density in aerated foodstuffs.

### Background of the Invention

In the large-scale continuous production of edible emulsified products such as mayonnaise and salad dressings, it is desirable to provide a product having uniform and palatable organoleptic properties. Consistency in taste, textural appearance, and mouthfeel, for example, in the emulsion products can be important for maintaining consumer satisfaction.

Blending and homogenizing procedures have been used to prepare viscous emulsified products such as mayonnaise and salad dressings. Mayonnaise is a well-recognized oil-in-water emulsion. Mayonnaise customarily has been formulated with certain ingredients including vegetable oil, egg yolk, water, and vinegar. Various other ingredients also have been included such as seasonings (e.g., spices, salt, sugar, flavorings) and/or preservatives. A mayonnaise product traditionally is defined as having at least 65% vegetable oil content by weight. However, variations on the basic recipe are known which can provide mayonnaise type products at lower oil contents. Salad dressings also have been made as an emulsion of vegetable oil in lower amounts than mayonnaise, egg yolk, water, and vinegar, which may be combined with starch base, and which may contain other spicing and flavoring ingredients.

Variations on these mayonnaise and salad dressing recipes also are known. For instance, mayonnaise analogs or light dressings also have been produced in which some or all of the vegetable oil content thereof has been replaced by starch bases and/or gum, and/or some egg yolk been replaced by egg whites, albumen or egg-free emulsifiers.

Numerous kinds of mixers are currently known and widely used for the blending and homogenizing of various types of edible viscous emulsions and similar process flowable foodstuffs. In one prior arrangement for continuous preparation of large quantities of edible viscous emulsions at high rates of output, constituents formulating a base emulsion premix are introduced into an in-line mixing device having an initial rotor/stator stage and a secondary pinned rotor stage. For example, in U.S. Pat. No. 5,114,732, a base emulsion premix is blended in the rotor-stator stage under high shear conditions, followed by processing the emulsion in the pinned rotor stage, which provides a low shear, gentle folding action for blending and homogenizing the base emulsion that has exited the initial rotor/stator stage with an additional ingredient and/or air. Air is introduced in such edible emulsions to modify the texture and appearance in desirable ways.

In the past, physical properties of edible emulsified products have been monitored based on measurements taken on samples of finished packed product. However, final product sampling has the shortcoming that the production line has run and generated more product for some time before an earlier-occurring disturbance in the process conditions may be identified through such finished product sampling.

### Summary of the Invention

The invention concerns a method for controlling the density to a predetermined level of an edible aerated foodstuff product during the preparation thereof. In preferred embodiments, a density measurement is acquired on the product at a location sufficiently downstream of a shearing unit used to form the aerated material such that the product is in an equilibrated state when its density is measured. Consequently, an adjustment can be made in the introduction rate of aeration gas at a location upstream of the shearing unit which is calculated to reduce any difference between the predetermined and measured product densities in a precise and reliable manner. In a preferred aspect, the density measurement and gas flow rate adjustment steps are performed repeatedly during a given process run, such as at regular time intervals. This invention also concerns a system operable to implement this method.

It has been discovered that foodstuffs which have been aerated with pressurized gas have an unstable density property upon exiting a shearing unit used to form the aerated product until sufficient time is allowed for the product to equilibrate and gas expansion to stabilize. In one aspect, the aerated product can not equilibrate until the pressure condition of the aerated product is permitted to subside to approximately atmospheric pressure. Once the aerated product is allowed sufficient time to equilibrate after exiting the shearing unit, then it can be reliably monitored as to its density property for process control purposes. As another aspect, the gas selected for aeration of the foodstuff preferably is a gas having a solubility less than air in the given foodstuff, which permits the foodstuff to equilibrate sooner, thereby enabling better control of the process.

In another aspect, the process control can be further improved by measuring upstream disturbances in the density property of one or more formulation feed materials before they are combined with gas or introduced into the shearing unit, and making appropriate adjustments in the gas introduction rate which are effective to pre-empt or at least reduce impacts on the product density that otherwise can be expected to arise therein from the upstream disturbances that have occurred in the one or more formulation feed materials.

The preferred method reduces density variability in aerated foodstuff products and thus improves their product quality and consistency. Increased product yields and improved fill consistency may also be possible. The aerated products of some embodiments have a more consistent appearance and texture maintained over the course of a continuous production run. The method and system are useful in the production of edible aerated foodstuffs including, for instance, mayonnaise, mayonnaise analogs, salad dressings, sauces, creamy fillings, confectionary, process cheese, and cream cheese.

### Brief Description of the Drawings

Other features and advantages of the invention will become apparent from the following detailed description of preferred embodiments of the invention with reference to the drawings, in which:
**FIG. I is a flow chart of a process for providing an aerated edible** dispersion having dynamically controlled density, according to an embodiment of the invention.
FIG. 2. is a flow chart of a process for providing an aerated edible dispersion having dynamically controlled density, according to another embodiment of the invention.
FIG. 3A is a block diagram of a feedback control arrangement for controlling product density according to an embodiment of the present invention.
FIG. 3B is a block diagram of a feedback control arrangement for controlling product density according to another embodiment of the present invention.
**FIG. 4A is block diagram of a model predictive control arrangement** for controlling product density according to another embodiment of the present invention.
FIG. 4B is block diagram of a model predictive control arrangement for controlling product density according to yet another embodiment of the present invention.
FIG. 4C is block diagram of a subroutine used in the model predictive control arrangement for controlling product density according to each of the embodiments of FIG. 4A and FIG. 4B.
FIG. 5 is a flow chart of a process for providing an aerated edible dispersion having dynamically controlled density, according to yet another embodiment of the invention.
FIG. 6 is a plot of product density and gas introduction flow rate over a period of time for a control experiment described in Example 1 in which a product densitometer was installed at the outlet of the shearing unit in a variation of the layout shown in FIG. 1.
FIG. 7 is a plot of product density and air introduction flow rate over a period of time for an experiment described in Example 2 in which a product densitometer was installed at located downstream of the shearing unit at which product equilibration had been achieved, in a process arrangement similar to that shown in FIG. 1.
FIG. 8 is a plot of starch base density, premix density, product density, and an air introduction flow rate over a period of time for an experiment described in Example 4 in which a separate densitometer was also installed on the starch base feeding line that communicated with a process controller which was operable to make adjustments in the gas flow rate based on the starch base measurements. Similarly numbered elements in different figures represent like features unless indicated otherwise.

### Detailed Description of the Preferred Embodiments.

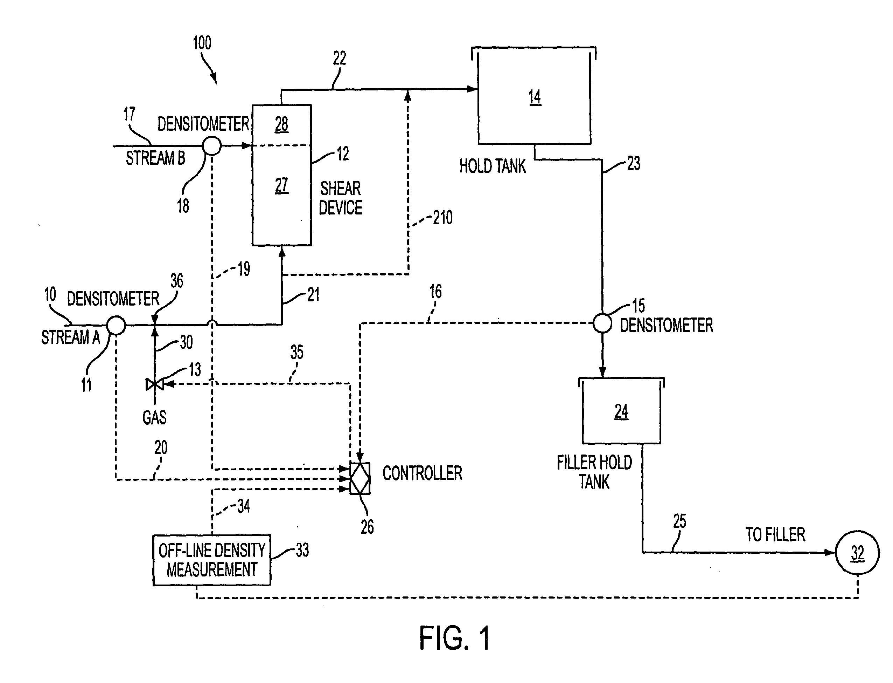

Referring to **FIG. 1**, a general process **100** is illustrated for manufacturing an aerated foodstuff in a continuous manner, in which the product density is controlled in a dynamic, accurate, and reliable manner.

A first edible food constituent stream **A** is introduced via feed line **10.** Food constituent stream **A** is pumped via pipe **21** to a dispersing or mixing device **12,** which may be a shearing unit, for emulsification. In route, stream **A** is combined with a gas **30** at location **36** wherein the gas is injected into the flowing stream via a gas control valve **13.**

Before gas injection, the food constituent stream **A** is conducted past an in-line densitometer **11** where a density measurement is made for reasons that will become more apparent from the subsequent descriptions. In this non-limiting illustration, a further food formulation constituent **B** introduced through line **17** is blended into an aerated dispersion in shearing unit **12.** The edible food constituent stream **B** is conducted past an in-line densitometer **18** in route to the shearing unit **12.**

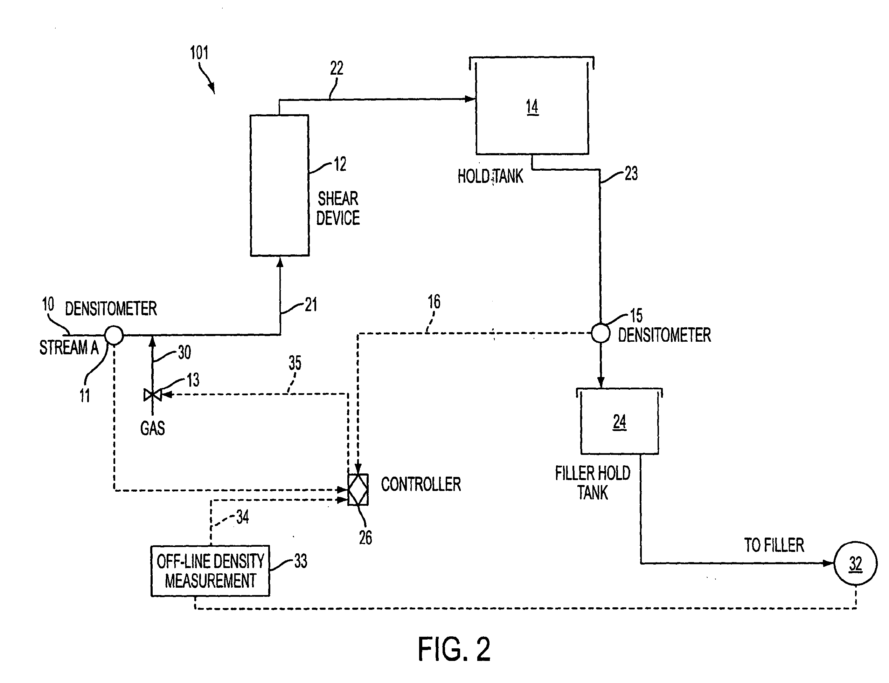

It will be appreciated that these illustrated input food constituent streams **A** and **B,** in terms of number and composition, and the type of mixing equipment, are exemplary only. Referring to FIG. 2, this invention is also applicable in another aspect to processing in an aerated food production system **101** having only one input food material stream A. Alternatively, it can be applied to a food aeration process system involving more than two input food constituent streams fed to the mixing or shearing unit with one or more thereof receiving injected gas. The invention also may use any type of dispersion or shear device suitable to disperse the gas in a flowable food material or composition. Moreover, the indicated location and single indicated location for the gas injection in FIGS. 1 and 2 is illustrative only. The gas may be injected at a different upstream location from the shearing unit, and/or at multiple upstream locations instead of merely one location as illustrated.

Upon treatment in the shearing unit **12,** an aerated food structure is created by distributing bubbles of gas substantially homogeneously throughout an emulsion or other type of edible dispersion. The bubbles may be of varying size, including sizes which may be less than and/or more than 10 microns. In one embodiment, the aerated structure produced is an edible dispersion. In a particular embodiment, the aerated structure is produced as an aerated emulsion of a fatty substance in an aqueous medium, i.e., an oil-in-water emulsion, such as mayonnaise, salad dressing, etc.

The resulting aerated dispersion product is conducted via pipe **22** to a first holding tank **14.** After residing in the holding tank **14,** the product is conducted via pipe **23** to a filler hold tank **24,** which supplies a filler station **32** via pipe **25.** The product is conducted past an in-line densitometer **15** in route to the filler holding tank **24** from the first holding tank **14.**

In one aspect, feedback control is provided in the aerated foodstuff manufacturing system **100** by feeding back information about a controlled variable, viz., density, measured downstream of the shearing unit **12.** This measurement is taken at a location sufficiently removed from the shearing unit 12 for equilibration to have occurred in the product, which information is used as the basis for control of the density process variable upstream in the system **100** before shearing by adjusting the gas feed rate via control valve **13.** The feedback can be accomplished by use of instruments (automatic control) via a controller **26,** or, alternatively, by a human operator (manual control). The installation location of the densitometer **15** where product equilibration has already occurred, as opposed to closer locations relative to the shearing unit where the density of the product is still subject to pressure condition effects, can be determined empirically on a given process system for a given set of process conditions.

It also will be appreciated that the dispersing or shearing unit **12** may not be required in all food aeration production operations to form an emulsion or microbubble or bubble dispersion of the injected gas in the foodstuff. In those situations, as indicated in **FIG. 1**, the shearing unit **12** can be omitted and the food constituent stream **A** containing the injected gas can be routed through line **210** directly to line **22.** In that alternate scenario, the product density measurement instead is taken at a location sufficiently removed from the gas location **36** for equilibration to have occurred in the product, which information is used as the basis for control of the density process variable upstream in the system **100** by adjusting the gas feed rate via control valve **13.**

For purposes herein, "equilibration" or "equilibrated" refers to a product state in which the product density is not subject to significant change due to effects of the pressure condition of the product and/or the dissolution of gas into the product after the product exits the shearing unit. The present investigators have learned that the density of an aerated flowable foodstuff, such as an aerated emulsion, which is pumped into and out of the shearing unit **12** under a positive pressure, is unstable and subject to change upon exiting the shearing unit until the positive pressure acting on the product sufficiently dissipates and becomes stabilized at a location sufficiently downstream from the shearing unit In one aspect, product density measuring is conducted at a location in a passageway downstream of the shearing unit wherein the dispersion product is under a pressure condition which is within +1 psig prior to density measurement (psig = lb/in² gage), although depending on the gas and food composition pressures above 1 psig may yield acceptable results.

This arrangement for acquiring product density readings according to embodiments herein is counter-intuitive, as the most apparent point of measurement seemingly would be immediately following the gas injection point upstream of the shearing unit, or, alternatively, immediately after preparing the aerated product in the shearing unit Conventional dunking generally has been that temperature can significantly influence density measurements taken on liquid products, while pressure effects thereon are generally predicted to be negligible. In addition, the extent of gas solubilization in the liquid part of the product also may not stabilize immediately upon emulsification of the formulation ingredients in the shearing unit, such that an allowance should be made for that possibility as well in selecting a location for taking the product density measurement sufficiently downstream of the shearing unit

Experiments performed by the present investigators, which are described in the examples below, have shown that no meaningful correlation is observed between the gas feed rate and the measured product density when the density measurement is taken too close to the outlet of the shearing unit where the effects of pressure and gas solubility on product density have not yet fully dissipated, i.e. the product is not equilibrated. Therefore, a location that is sufficiently downstream from the shearing unit for taking product density measurements, where only process variables other than pressure or gas solubility may still impact product density, can be determined empirically for a given process set up and conditions.

For automatic control, a densitometer **15** is installed on a product line at a downstream location sufficiently distant from the shearing unit, when used, such that product equilibration has occurred in the product stream. The densitometer produces a signal (electrical, digital, pneumatic, etc.) that is indicative of the measured density of the equilibrated product The densitometer is linked via communication line **16** with a controller **26** for inter-communication. The controller **26,** in turn, is linked via communication line **20** with gas control valve control **13.** The densitometer may be programmed to take measurements at regular intervals or continuously. Alternatively, communication link **16** may permit command signals from controller **26** to dictate when and at what interval the density measurements are taken by the densitometer.

In one implementation, proportional-integral-derivative (PID) control may be applied using the output of the product densitometer to directly control the gas injection rate without reference to the upstream premix and starch base densities. PID controller schemes generally are designed to eliminate the need for continuous operator attention. A controller is used to automatically adjust the gas injection rate, as the controlled process variable, to hold product density measurements at a predetermined set-point. An offset is the difference between the set-point value and a real-time measurement of a process variable. The variable being adjusted, e.g., gas injection rate, usually is equal to the output of the controller. The output of the controller will change in response to a change in measurement or set-point. Depending on the controller manufacturer, integral or reset action is set either time-repeat or repeat/time, as one is merely the reciprocal of the other. As generally known, the three modes of a PID controller typically have the following features: with the proportional band the controller output is proportional to the offset or change in measurement; with integral action the controller output is proportional to the amount of time the offset is present, which is eliminated by integral action; and with derivative action the controller output is proportional to the rate of change of the measurement or offset, and the controller output is calculated by the rate of change of the measurement with time.

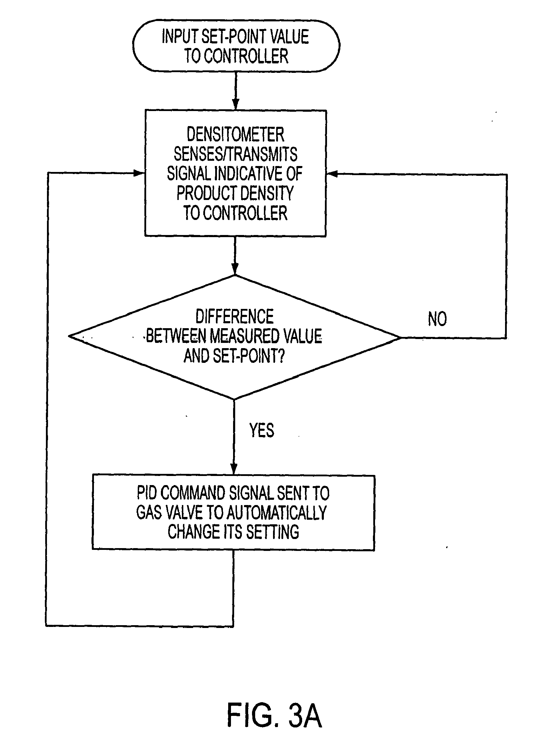

Referring to FIG. 3A, for instance, in a PID control type approach densitometer **15** senses and transmits a signal indicative of the product density automatically to the controller **26** which processes and analyzes the signal, i.e., translates it, and compares the measured density value with a preset desired or target value or so-called "set point" If a difference exists between the measured actual density value and the target value, the controller sends a command signal via communication line **35** to gas valve **13** which automatically changes the setting on the gas valve in a manner predicted to effect an appropriate adjustment in the product density towards the target value. Based on the signal received from controller **26,** the gas valve **13** is capable of regulating the amount of gas flowing through gas inlet pipe **30** into conduit **21** through which the premix is fed to the shearing unit **12.** Those skilled in the art will recognize a wide variety of means suitable for use as a gas volumetric flow rate control means, and the mechanism is not limited to control valves.

The controller **26** can also convert the signal received from the densitometer **15** into displayable reading of density, which can be displayed at the densitometer (via return signal communication), on the controller, and/or on a graphical user interface including a computer display monitor (not shown) linked to the controller for inter-communication.

For manual feedback control, an operator periodically measures the instantaneous product density at densitometer **15,** such as by observing density readings taken by a sensor installed on the product line **23,** which can measure and generate density values or signals indicative of density values in real time. The densitometer **15,** again, is installed at a downstream location on the product line from the shearing unit sufficient that product equilibration has already occurred.

In one preferred aspect, for either automatic or manual modes of process control, the density measurements are made intermittently at regular time intervals during a process run, so that density adjustments can be made regularly, if needed, via the feedback control system.

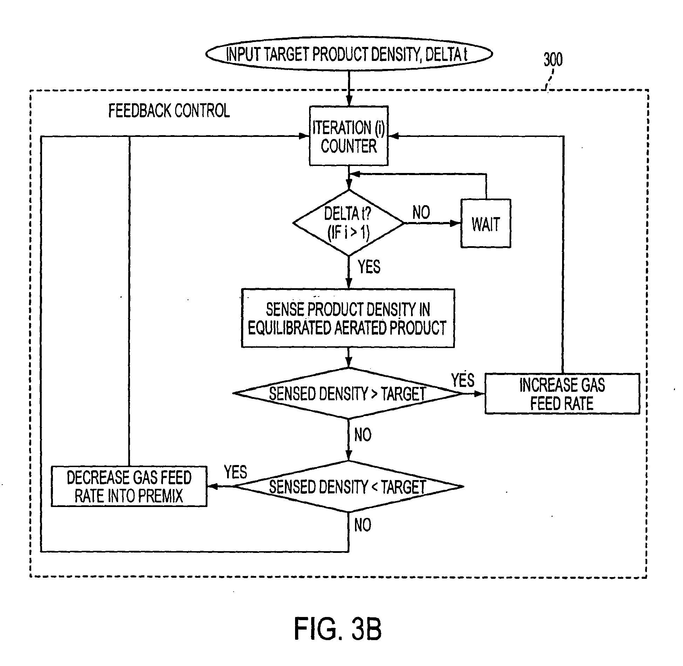

Referring to FIG. 3B, a control arrangement **300,** as applicable to either the above-indicated automatic or manual modes of process control, is used to dynamically control product density and continuously maintain it at a specified target value during a process run. Set points are pre-established for the product target density and the time interval Δt for in-process density measurements to be taken. It will be appreciated that these inputs are preselected before a given process run, but also may be changed during a given process run. The gas has an effect of lowering the overall product density. Therefore, if the measured in-process product density is measured to be above a preselected target value, the controller (or operator if manual mode) increases the gas flow back upstream by opening the gas valve an amount predicted to change the product density sufficient to offset (i.e., reduce) the difference between the most recently measured density value and a preselected target product density value.

Alternatively, if the product density is measured to be below a desired target value, the controller (or operator if manual mode) decreases the gas flow by closing the valve an amount predicted to offset the difference between the most recently measured value and a preselected target value. The next product measurement taken, after time interval Δt has passed, will determine how well the most recent gas flow rate adjustment made has performed in smoothing out the aberration detected in the product density in the preceding measurement. If another aberration is detected in the most current measurement, another gas flow rate adjustment is made that is predicted to eliminate the deviation as was most recently identified, and so on, through the remaining duration of the given process run or a different overall monitoring period desired. In this way, aberrations in the measured product density may be identified and addressed in an iterative manner.

Although not shown in FYG. 3B in order to simplify the illustration, it will be appreciated that if the most recently measured density value is determined to be above or below the target value, that the algorithm can perform, before making a gas valve setting adjustment, a further determination of whether the deviation is outside any preselected tolerance range assigned relative to the target value; if it is, an appropriate gas valve setting adjustment is made, and, alternatively, if it is not, then no valve control setting adjustment is made for that cycle and the process continues into the next sense and compare iteration after the next prescribed measurement time interval Δt has passed. In another approach, the density measurements may be numerically cut off at a selected significant figure such that smaller numerical deviations from the selected target value are effectively ignored, and no remedial action is taken at the gas control valve until deviations are observed which are within the range of significant figures being applied.

For a given set of process conditions and equipment set-up, the manufacturing system **100** can be pre-sampled and programmed to develop a predictive model, which embodies a mathematical algorithm, of the relationship between the future value of the finished product density as indicated by the densitometer and the present values of the finished product density, upstream component densities, and gas introduction flow rate. In this manner, the predictive model developed can take into account the present values of all the density inputs to predict the future product density and make the appropriate adjustments. To implement such a predictive model, the controller may comprise a programmable logic controller (PLC) having access to computer code, embodied in microelectronic hardware mounted on a motherboard or the like and/or in software loaded on a remote computer in communication therewith. PLC modules having these functionalities are commercially available. The controller may be operated as a proportional-integral-derivative (PID) controller or a predictive controller setup (PSC) controller, the latter being preferred. The code comprises an algorithm which inter-relates, in mathematical terms, the measured product density, the gas introduction flow rate, and preferably also certain measured feed material densities. In one aspect, the algorithm is used in developing the predictive model applied to an aerated foodstuff production line. The algorithm can also be a type which may adapt to changes sensed during a process run in certain other process control variables, in addition to gas feed rate, which may also impact product density, such as temperature changes in feed materials and/or at the product density measuring site.

A non-limiting example of a controller system having both the hardware and software which may be adapted to develop and implement such an algorithm for process control for an aerated foodstuff as described herein is a QUICKSTUDY™ process controller system, developed by Adaptive Resources, Pittsburgh, PA. It works from normal operating data, either real-time or historical, and it automatically generates process models which can be used to predict the direction the process is taking and take corrective action immediately after, or before in the case of feedforward monitoring, to eliminate or pre-empt deviations from the product density set point. As explained and shown elsewhere herein, such a commercially marketed process control system per se can not properly model and control an aerated foodstuff production line without the benefit of the current discovery and understanding that the product density of aerated foodstuffs and measurements thereof are acutely sensitive to the measurement site chosen within the system and that only certain locations within the system (as described herein) may be successfully used.

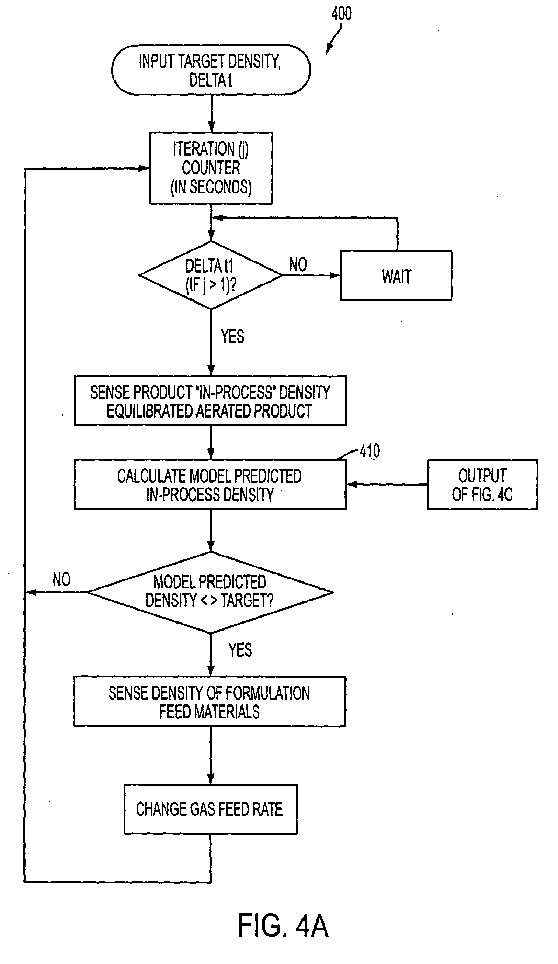

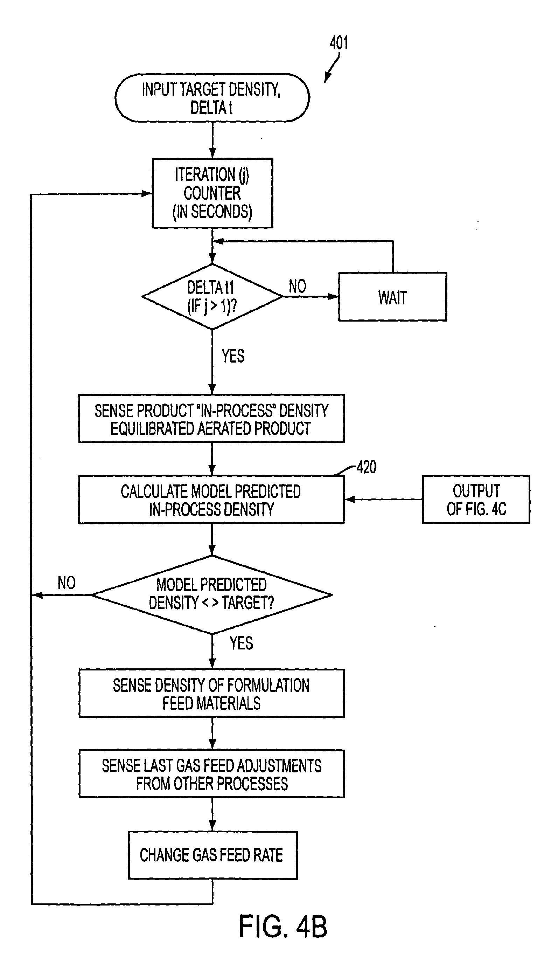

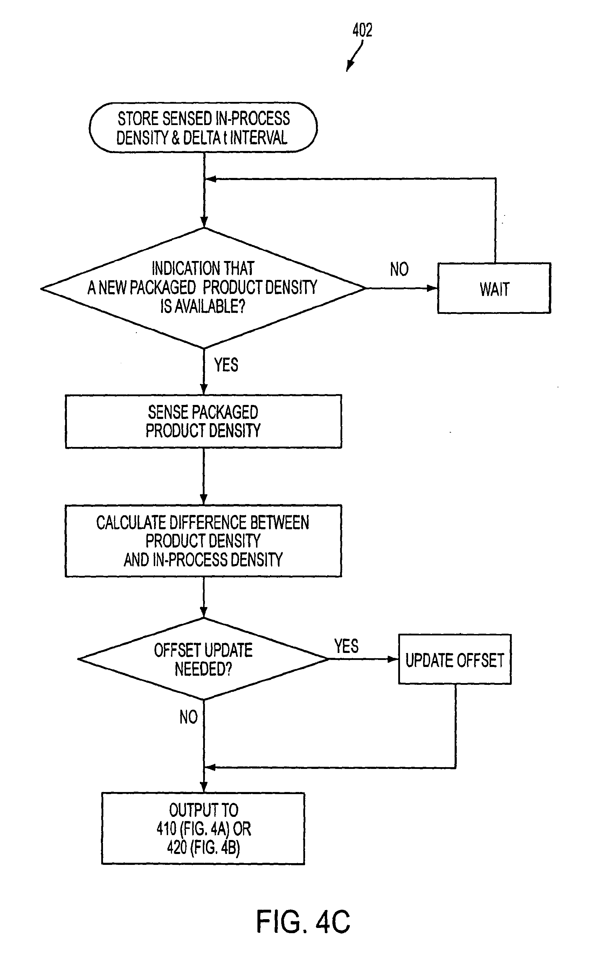

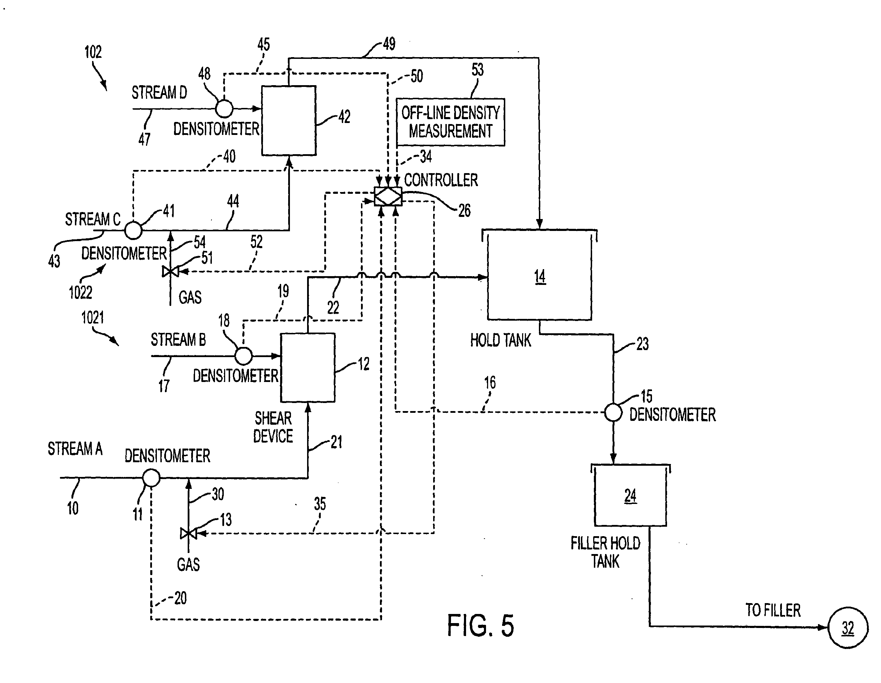

Referring to FIG. 4A, model predictive control arrangement 400 is used to dynamically control product density and continuously maintain it at a specified target value during a process run. In process density measurements can be acquired over a relatively short interval, such as every few seconds. The process control can be further refined by incorporating product density data taken from the packaged product itself, in addition to the above-discussed in-process density measurements. However, the measurement of product density off the production line based on laboratory measurements taken on opened packages of aerated foodstuff is generally more time-consuming. Those data may only be practically obtained every few hours or even days. FIGS.4A and 4C show an arrangement for integrating the packaged product density measurements into a process connol scheme of the invention. In this arrangement, a product density set point or target is selected, as well as an initial offset between the in-process density and the packaged product density. After the gas is introduced and the resulting mixture is treated in the shearing unit and outputted, the in-process product density of the aerated dispersion product is measured at a downstream location over a relatively short time interval delta (Ä) t1 (such as every 2-10 seconds). In addition, the product density of packaged aerated dispersion product is being collected off the production line at longer time intervals (such as every 3 hours). The measured in-process product density is compared to the target value at the controller to determine if an offset exists. If the packaged product density has been inputted in the most recent iteration of the algorithm, then the offset between the in-process density and the packaged product density will be updated as needed. This updated offset will be incorporated into the prediction horizon of future in-process product densities predicted by the controller. Additionally, the density values are sensed for the formulation feed materials, such as Stream A and Stream B. Then, the gas feed rate is adjusted by the controller calculated to change the density of the aerated dispersion product to correspond with the preselected density target or set point. These steps are repeated at least once, and preferably over predominantly or substantially the entire production run. FIG. 4B is separate embodiment which is implemented similarly as FIG. 4A, but further involves providing the process control for parallel-running production lines instead of a single line, which feed a common packaging line (such as illustrated in FIG. 5, discussed below).

The feedback control and/or model predictive control are independently used for a part or parts of a given process run, but not necessarily over the entire process run. For instance, during start-up of a process run, before relatively steady state conditions are achieved in the system **100,** feedforward control may be activated, but not the feedback control arrangement which is activated subsequently during the same process line as the system approaches or achieves relatively steady state conditions. "Relatively steady-state conditions", for purposes herein, generally refers to a process state in which changes in the variable of interest, e.g., density, can still occur, but have subsided to within the range of the predictive model being applied for the feedback control or feadforward control arrangement as applicable.

For purposes herein, the "density" of a sample of material is defined as the mass of the material to a given volume of the sample. The density of an aerated material is affected by pressure and temperature effects. As indicated above, although conventional thinking has been that pressure effects on densitometer measurements are negligible, the present investigators have found that gas solubility effects also can impact density measurements in an edible emulsion if made immediately subsequent to the shear or dispersion operation used in preparing an aerated emulsion.

In a preferred embodiment, a densitometer is used to derive density values for various feed and product streams in the aerated foodstuff production operation. The use of densitometers in accordance with embodiments herein provides accurate and complete control of the process. This eliminates the need for separate flow, temperature, and pressure measurements to derive density values, although that alternate approach is not excluded.

In one aspect, the density measurements may be taken using a radiation source meter or a Coriolis meter. The radiation source meter may be a conventional radiation gauge for measuring density, including commercially available devices such as ALARA radiation source meters. Radiation meters suitable for in-line installation which are useful for measuring product density in a product stream are commercially-available, such as from Berthold Industrial Systems (e.g., meter LB379). Radiation gauges generally can provide contactless continuous density measurement independent of color, temperature, pressure, viscosity, conductivity or the chemical properties of the process product. Density measurement in radiation gauges is based on the measurement of the absorption of gamma radiation as it passes through the process material. The radiation emitted by a gamma source is attenuated as it passes through matter. This absorption is an exponential function of measuring distance and density. Thus, if the measuring path is constant, the attenuation of radiation is an indication of the product density. That is, absorption is proportional to changes in material density, and as the measuring path is held constant, and this provides an indication of product density. In one aspect, the radiation gauges are adapted to send signals to microprocessor-based evaluation electronics. The above-mentioned commercially-available radiation gauges may include a scintillation crystal for automatic drift compensation, which compensates for the effects of temperature variation and component aging. Use of the scintillation counters as a detector supports a digital design. These radiation gauges also may have single-point calibration and a current loop signal proportional to density.

In an alternative aspect, the density measurements are taken with a Coriolis meter. A Coriolis meter, also often referred to as a Coriolis mass flow meter, is especially useful on light slurries or clean fluids with reduced solids content, such as mayonnaise products. A Coriolis meter can dynamically measure the flowing density of a stream in a continuous manner. A Coriolis meter has two main parts: a sensor and a transmitter. The sensor is made up of one or two tubes through which the fluid passes. An electromagnetic driving mechanism vibrates the tube(s). The flow through the tube(s) exerts a Coriolis force proportional to the mass flow rate. The natural resonance frequency of the tube structure is a function of its geometry, materials of construction, and the mass of the tube assembly (mass of the tube plus the mass of the fluid inside, the tube). The mass of the tube is fixed. Since mass of the fluid is its density multiplied by its volume (which is also fixed), the frequency of vibration can be related to the density of the process fluid. Therefore, the density of the fluid can be determined by measuring the resonant frequency of oscillation of the tubes. Moreover, as the density of the material changes, it affects the frequency of vibration of the tube. This is a measurable quantity. The change in frequency is proportional to the density of the material. The magnitude of the force is detected by the transmitter and converted to a mass flow rate.

The transmitter powers the sensor, processes the signals from the sensor, generates output signals, and totalizes the flowing units. The transmitter for each sensor is typically programmed with two unique numerical values: the manufacturer's flow and density calibration factors. While manufacturers may address these values in different ways, they usually have numerical inputs to the transmitter that convert the sensor outputs to common units. This enables the meter to perform to stated specifications. After programming the transmitter with the calibration factors, the output signals are programmed.

The transmitters can be integrally or remotely mounted relative to the associated meter sensor, and can operate on either ac or dc power. The transmitters may require separate wiring for their power supply and for their output signals. The pipeline mounts often require either in-line or "strap-on" installations. Transmitters may offer standard electrical connections for power and signal, and data interfaces also are provided in a preferred embodiment. Analog and/or digital outputs can be provided and used.

Transmitters optionally may include some front end signal processing electronics mounted on the tube itself to support generation of digital outputs from the meter to the controller. Such front end electronics, which can include an A/D converter, processor, software, and sensor coefficients and settings, may be mounted on the tube with a direct connection to the instrument's temperature, strain, drive and phase shift measurements. The signals may be transmitted via RS-485 to a main electronics converter mounted on the instrument itself or remotely some distance away via wire or cable.

The radiation source or Coriolis meter may communicate with the controller via a communication wire, an Ethernet cable, or a wireless communication system (e.g., via radio frequency communications), or by other means. In one non-limiting implementation, the frequency output of the densitometer instrument to the controller, and optionally to other accessory equipment (e.g., flow computer, pulse counter for proving, or totalizer), may be expressed as a pulse-scaling factor (PSF). This coefficient (or coefficients) defines the relationship between the flow rate and the frequency output. It is usually expressed as Hertz (Hz), a number representing pulses per second, for a given flow rate. These values should represent the maximum value for the operation, but not exceed the sensor's range. Nonlimiting examples include: 5000 Hz = 5000 pounds per minute, 3000 Hz = 3000 kilograms per second, and so forth. The transmitters usually have all the common units of flow preprogrammed as selectable items. The program not only includes mass units but also units for volume flow.

It will be appreciated that the radiation source or Coriolis meters also may have displays that can be locally or remotely mounted. The transmitters also may be provided with a local display and keypads to allow easy access to process data. It also will be appreciated that other types of densitometers may be used in lieu of radiation source or Coriolis meters. These other devices include other types of direct mass vibration measurement instruments in lieu of a Coriolis meter such as, e.g., a vibrating spool, a tuning fork, hydrometers, displacement floats, capacitance probes, and so forth.

In one embodiment, the aerated foodstuffs which may be manufactured in the process and system described herein providing improved product density management comprise edible dispersions. In a particular embodiment, the edible dispersions are edible emulsions, and particularly oil-in-water emulsions. The edible dispersions include spoonable products, such as mayonnaise, mayonnaise analogs, salad dressings, light dressings, sandwich spreads, and also to other products such as pourable dressings, sauces, cream fillings, and the like.

As described herein, a gas used to aerate an edible emulsion or other foodstuff. For purposes herein, "aerate" refers to supplying or charging a liquid with a gas. The gas preferably has a lower solubility than air in the foodstuff being produced under process conditions. For purposes herein, the term "air" refers to a gas composed of approximately 21% oxygen and 79% nitrogen. The gas may be, for example, nitrogen, helium, air, and so forth. These gases may be used individually or in a combination thereof. Preferably, the gas used contains no air or only very small amounts of air. The solubility of various gases in aerated foodstuffs, and mayonnaise and salad dressings in particular, has been observed to decrease in the order of air, nitrogen, and helium. The rate of equilibration and stabilization in the aerated product is generally related inversely to the gas solubility involved.

Aerated foodstuffs which have been aerated with a gas, such as nitrogen or helium, having lower solubility than air in the foodstuff equilibrate and stabilize more effectively and rapidly after exiting the shearing unit in terms of the measured density property. Gases having a lower solubility than air also have been observed to provide more predictable relationships between the density parameter of aerated foodstuffs and the rate of gas introduction, from a process control standpoint.
That is, when a gas is used having a solubility less than air, adjustments in the gas introduction rate are more rapidly and reliably reflected by changes in the density values measured in the sheared foodstuff in a more predictable manner. It also is preferable that the aeration gas be an inert gas, which does not interact (bio)chemically with the food product. Nitrogen gas is desirable both from inertness and reduced solubility standpoints. It also is readily available and typically is less costly than other inert gases, such as helium.

In another embodiment, the present invention also encompasses processes for aerating roods in which a gas having a food solubility greater than air, such as carbon dioxide, is used: These aerated foods generally will taken longer to equilibrate than the same food aerated with oxygen, all other things equal. However, a common goal with reduced solubility gas scenarios still applies in that the density measurement should be acquired on the product at a location sufficiently downstream of a shearing unit used to form the aerated material such that the product is in an equilibrated state when its density is measured. A non-limiting example of a food type for which it may be useful in certain applications to inject and disperse a gas having higher solubility than air includes the production of certain chocolate compositions, in which aeration gas is injected but which do not require use of the shearing unit. The density measurement must be implemented far enough downstream from the final injection site to enable measurement of an equilibrated density value in the aerated food stream.

The percent (%) of gas incorporated into the aerated foodstuff, for a given set of process conditions, may be calculated as follows:
percent gas = 100 - (D₁/D₂ x 100), where D₁ is the density of the aerated product and D₂ is the density of a non-aerated product of the same except non-aerated formulation.

The examples described infra involve edible spoonable products on which the process is illustrated. Mayonnaise type products and salad dressings are included among these products. Mayonnaise type products include mayonnaise and mayonnaise analogs. Mayonnaise is an emulsified semi-solid, non-pourable food dressing which may be prepared, for example, from vegetable oil, water, sugar, a food grade emulsifier exemplified by egg yolk, and an acidulent, and, optionally, various other seasoning additives such as salt, spices, flavors, and other ingredients imparting taste characteristics to the composition. Also, preservatives, colors (not simulating egg yolk color), and stabilizers may be included. Modified versions of mayonnaise, sometimes referred to as mayonnaise analogs, may include a starch base and/or gum in lieu of some or all of the oil content, and/or some or all the egg yolk may be replaced by egg whites, albumen, or egg-free emulsifiers.

The total water content may vary depending on the type of aerated product being manufactured. The amount of starch base added to a particular formulation may vary depending on the amount of vegetable oil being used and replaced by the starch, in the formulation.

As indicated, the aerated foodstuff also may be a salad dressing: Salad dressings may comprise a similar formulation as many mayonnaise type products but usually contain a lower level of oil than mayonnaise formulations and more water, and often are formulated with a starch base. The aerated foodstuff also may be a sauce. Sauces include those containing oil, butter, and/or cream, which may include, for example, Sauce Hollandaise and Sauce Carbonara. The aerated foodstuff also may be a creamy dessert, such as a dispersion containing oil and sugar. Crème Anglaise is an example of such a creamy dessert.

In one embodiment, an aerated spoonable food product is manufactured with the process and system described in accordance with FIG. 1, in which two separate feed material streams are introduced into the shearing unit. As a non-limiting example, the primary feed stream **21** may be a premix **A** containing an edible food portion including water, salt, sweeteners, oil, eggs, and flavors, and a gas portion 30 comprising gas injected into the premix A before it is introduced into the shearing unit **12.** The shearing unit **12** may be a rotor/stator unit, a colloid mill, and the like. The premix/gas combination is subjected to shear forces in shearing unit **12,** which finely subdivide the premix and cause an aerated oil-in-water emulsion to form. In this illustration, a starch composition may be introduced as stream **B** at the shearing unit, preferably after a shearing operation is first performed on the premix. The base composition is then folded into the sheared premix under more gentle blending, such as by providing a shearing unit **12** which includes a subsequent pinned rotor stage. An example of such a two-stage shearing unit is described, for example, in commonly assigned U.S. Pat. No. 5,114,732, which descriptions are incorporated herein by reference.

As a non-limiting illustration, the starch composition **B** introduced at the pinned rotor stage of the shearing unit may contain, e.g., water, starch, sugar, and some or all of the formulation vinegar, and flavors. Additional ingredients may be included. The formulation vinegar also may be injected in-line into the premix prior to the shearing unit via an injector installed on line 21 (not shown). Eggs may be used as the emulsifier in this illustration, but products also may be manufactured as non-emulsified dispersions in which starch base and/or gum replaces all egg content.
In one embodiment, a premix stream A is pumped into the shearing unit **12** at a pressure of about 40 to about 60 psig, and the emulsified product subsequently exits the unit **12** at an outlet pressure of about **17** psig or greater, particularly about 17 psig to about **23** psig, and more particularly about 19 to about 21 psig. The emulsion exiting the shearing unit **12** generally is a relatively viscous spoonable material (or viscous pourable material in other embodiments), but includes pockets or cells of the gas to form a three-dimensional celled structure, which substantially retains that structure in a shelf-stable manner after packaging.

The mass of the gas incorporated into the aerated foodstuff product is generally negligible. The product density of an aerated foodstuff may vary depending on the particular formulation. For aerated spoonable mayonnaises and salad dressings, for instance, it may range from about 0.85 to about 1.15 g/mL, more particularly about 0.88 to about 1.05 g/mL. These aerated foodstuffs generally have a storage stable, and lightened yet stiff texture.

The foregoing descriptions illustrated embodiments of the invention in which a continuously-running production run was generally at a steady-state condition when density measurement and process control scheme was applied as described. That is, the process control modality described herein is applied after density measurements are generally uniform other than disturbances not associated with start-up or shut-down intervals which occur, which, in turn, are counter-acted and smoothed out by the inventive process.

In another embodiment of the present invention, the process control is applied to a discontinuous production run in which upstream product preparation has been terminated and hold tank **14** (FIG. 1) for example, is receiving no additional product input, and thus densitometer measurements are taken on a product stream fed from an initial fixed and non-replenishing amount of product being discharged out of hold tank **14.** In this scenario, the controller must be inputted with tank level (product volume) information from hold tank **14.** The tank level can be measured in any convenient manner, such as using sensors (such as capacitance sensors) installed in tank 14 which are adapted to communicate measurement data to the controller 26.

Referring to FIG. 5, in yet another embodiment, a system arrangement **102** is provided in which surge tank **14** receives product inputs from a plurality of aerated product production lines **1021** and **1022** operating in parallel at the same time in which gas injection into a food constituent stream is conducted in each of the parallel production lines. Production line **1021** has similar features as the system **100** shown in FIG. 1. Production line **1022** is illustrated as having a similar arrangement of features as line **1021,** although that is not required. The combined product has its density measured downstream of the surge tank **14** at location **15.** Above-discussed FIG. 4B shows a general process control scheme applicable to the system of FIG. 5. If Referring to FIG. 5, if an offset occurs between the target and measured product density, the controller **26** simultaneously counteracts the offset over both production lines.

All percentages, ratios, parts, and amounts used and described herein are by weight unless indicated otherwise. The examples that follow are intended to further illustrate, and not limit, embodiments in accordance with the invention.

### Examples

### Example 1:

As an initial control study, an aerated spoonable foodstuff was produced in a process system which was generally the same as that shown in FIG. 1, as described above, except that the densitometer used to measure product density was located in piping **22** at a location immediately adjoining the outlet of shearing unit **12.** A two-stage shearing unit was used of the type as generally described in U.S. Pat. No. 5,114,732. A base emulsion premix was pumped into the shearing unit **12** at a pressure of about 40 to about 60 psig, and the emulsified product subsequently exited the unit **12** at an outlet pressure of about 20 psig. A pressurized gas was combined with the base emulsion premix before the resulting combination was pumped into the shearing unit. A control valve was installed on the gas inlet line to provide control over the gas feed flow rate .

The base emulsion premix was fed into the shearing unit at a rate of approximately 350-650 lbs/minute. The base emulsion premix was suitable for preparation of a mayonnaise type product and contained primarily water, oil, and emulsifier, which was mixed in the shearing unit with a starch base comprised of water and starch.

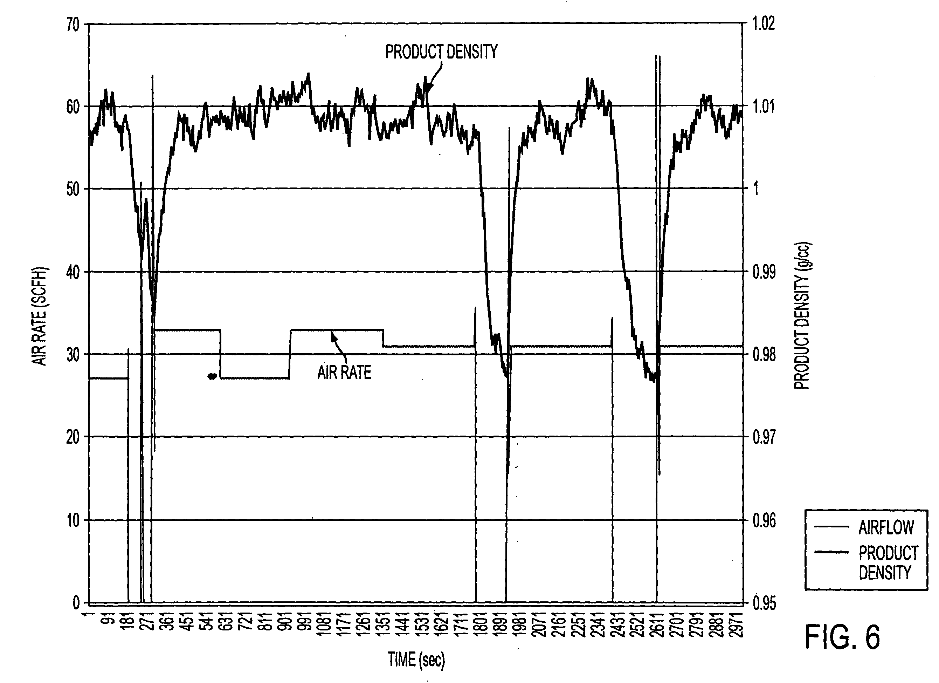

For limited purposes of this control study, density values for the aerated product were continuously recorded in a conventional manner over a period of time, but feedback control was not implemented in this control study. The results are plotted in FIG. 6. Unless indicated otherwise, the gas introduction rate is measured in units of standard cubic feet per minute (SCFH).

The results shown in FIG. 6 clearly indicate that no discernible relationship was observed to exist between the gas introduction rate and produce density with the densitometer installed near the outlet of the shearing unit. This control study was repeated under similar conditions except replacing nitrogen for air as the gaseous material. Likewise, no discernible relationship was observed to exist between the nitrogen introduction rate and produce density with the densitometer installed near the outlet of the shearing unit.

### Example 2:

In these experiments, the densitometer was situated further downstream of the shearing unit at a location similar to what is generally illustrated in FIG. 1. The densitometer was fitted on a conduit **23** connecting a 500 gallon hold tank **14,** which was located downstream on the exit side of the shearing unit **12,** and a smaller 50 gallon hold tank **24** at the input side of the filler **32.** Piping 22 had a length of approximately 5 feet and diameter of about 4 inches, and the densitometer was located immediately preceding tank **24.** Piping **23** had a similar diameter as piping **22.** The product had an average dwell time of approximately 5-15 minutes in holding tank **14.** The dwell time in filler tank **24** was approximately 1-5 minutes.

Otherwise, the process materials, equipment, and manner of recording the product density measurements were similar to that described in Example 1.

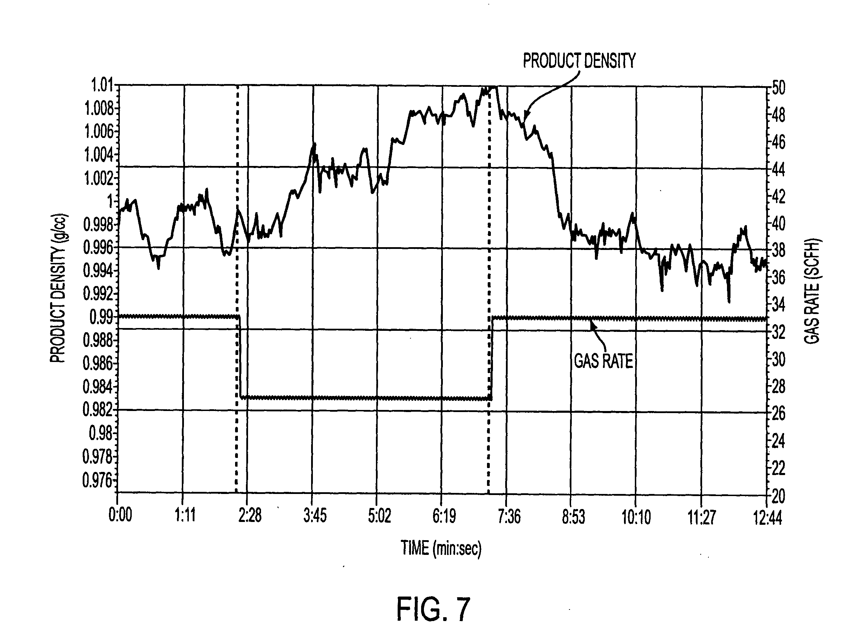

In a first process run, air was used as the gas. The results are plotted in FIG. 7. The product density was observed to rise when the air flow rate was decreased, and vice versa, in a predictable manner.

In a second process run, nitrogen was used as the gas. The product density again was observed to rise when the air flow rate was decreased, and vice versa, in a predictable manner.

The results of Example 1 and 2 revealed quite surprisingly that the product density parameter of aerated foodstuffs was highly sensitive to where the density measurement was taken downstream of the shearing unit. Although not desiring to be bound to any theory, it is postulated that the food product density is impacted by gas solubilized in the product upon exiting the shearing unit and for some period of time until it sufficiently dissipates so that the product can equilibrate and stabilize.

### Example 3:

Experiments were performed to investigate and compare the possible effects of the choice of aeration gas on the density retention of aerated emulsions. Nitrogen and air were studied in this respect. Also, the effects of the choice of aeration gas were studied in two different types of aerated emulsions: A) a mayonnaise, and B) a mayonnaise analog. The process system used to manufacture each type of aerated emulsion studied corresponds to that described in Example 2.
A) Study on Mayonnaise:
   A mayonnaise premix comprising approximately 80% oil and 6% eggs with the remainder comprising water, sweeteners, and flavors. Gas (either nitrogen or air, depending on the run) was combined with the base emulsion premix at a rate of 10-15 SCFH. The product density was measured both at the outlet of the shearing unit as the "initial-product density" (see Example 1), and separately at the downstream intermediate the first and second holding tanks as the "Pre-filler product density" (see Example 2). The density measurements observed for the aerated mayonnaise product are reported in Table 1. Each density value reported in Table 1 is an average of three data points taken over a given process run using the respective gas.

**Table 1**

| Gas | Nitrogen | Air |
|---|---|---|
| Initial Product Density (g/cc) | 0.875 | 0.873 |
| Pre-filler Product Density (g/cc) | 0.891 | 0.906 |
| Change(%) | -1.8 | -3.7 |

The results in Table 1 clearly show the superiority of the density retention in the aerated mayonnaise using nitrogen as the aeration gas as compared to air.
B) Study on Mayonnaise Analog:
   A mayonnaise analog was prepared using a base emulsion premix formulation and a starch base formulation similar to those described in Example 1. Gas (either nitrogen or air, depending on the run) was again combined with the base emulsion premix at a rate of 20-60 SCFH. The product density was measured both at the outlet of the shearing unit as the "initial product density" (see Example 1), and separately at the downstream intermediate the first and second holding tanks as the "Pre-filler product density" (see Example 2). The density measurements observed for the aerated mayonnaise analog product are reported in Table 2. Each density value reported in Table 2 is an average of three data points taken over a given process run using the respective gas.

**Table 2**

| Gas | Nitrogen | Air |
|---|---|---|
| Initial Product Density (g/cc) | 0.961 | 0.963 |
| Pre-filler Product Density (g/cc) | 0.968 | 0.984 |
| Change(%) | -1.5 | -2.2 |

The results in Table 2 clearly show the superiority of the density retention in the aerated mayonnaise analog using nitrogen as the aeration gas as compared to air.

### Example 4:

The effects of recording and responding to changes in density measured in upstream components was investigated. The process materials and set up of Example 2 were used. Air was used as the aeration gas. A Coriolis meter was also installed on the starch base feed line 17 to permit density measurements thereon. A Coriolis meter also was installed on piping 23 to measure product density at an equilibrated product location.

A QUICKSTUDY™ process controller system, developed by Adaptive Resources, Pittsburgh, PA, was installed and operated as an automated control system for the process, which communicated with, i.e., received density measurement signals, from the Coriolis meter used to measure product density and a separate Coriolis meter used to measure the density of the starch base feed line. Deviations sensed in the starch base feed material were identified by the controller system and appropriate corrective adjustments were made at the gas feed rate controller predicted to offset and pre-empt the deviations otherwise predicted in the product density if no immediate corrective action is taken upstream in the gas flow rate. Deviations sensed in the product material also were identified by the controller system, and the system was automated to make appropriate corrective adjustments at the gas feed rate controller, if needed, predicted to eliminate the deviations.

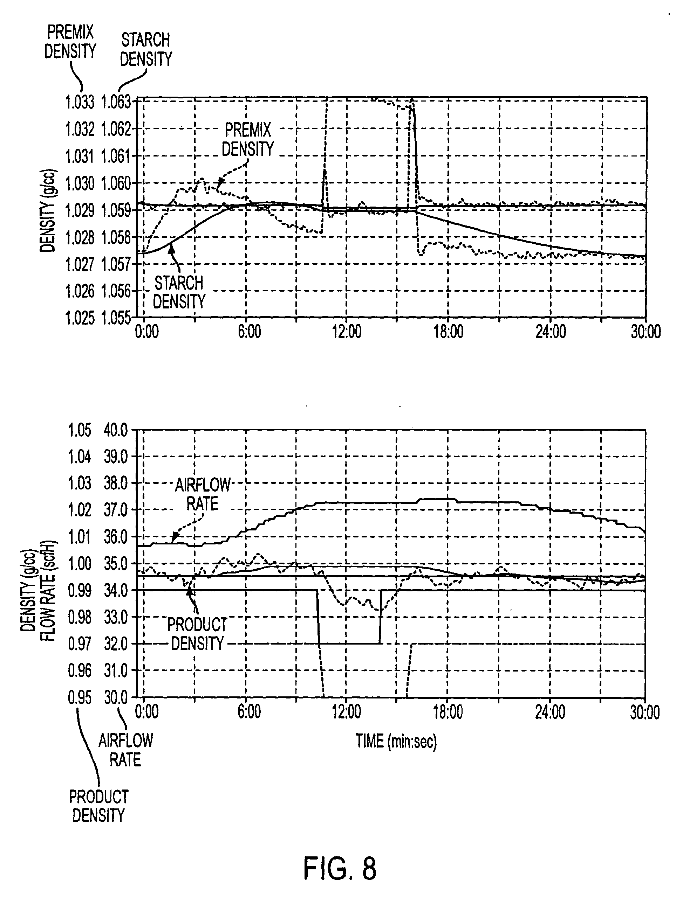

During the process run, the density of the starch base feed material was arbitrarily changed by 0.2%. An increase made in starch base density was responded to automatically by the controller before the product density was impacted by making a corresponding decrease in the gas feed rate, and, conversely, a reduction made in starch base density was automatically responded to by the controller before the product density was impacted by making a corresponding decrease in the gas feed rate. The product density was recorded throughout each event. The results obtained are plotted in FIG. 8.

As shown in FIG. 8, feedforward control was shown to be feasible as the automated controller system was able to make suitable dynamic corrections in the air flow rate in response to starch base density aberrations, such that the product density could be maintained substantially uniform.

While the invention has been particularly described with specific reference to particular process and product embodiments, it will be appreciated that various alterations, modifications and adaptations may be based on the present disclosure, and are intended to be within the spirit and scope of the present invention as defined by the following claims.

## Claims

1. A method for controlling the density to a predetermined level of an edible aerated foodstuff product during the preparation thereof, in which a product density measurement is obtained on an aerated foodstuff product at a location sufficiently downstream of an aeration gas injection location used in forming an aerated foodstuff product such that the product is in an equilibrated state, and making an adjustment in an introduction rate of aeration gas wherein the adjustment is calculated to reduce any difference between the predetermined and measured product densities.

2. The method of Claim 1, wherein the aeration gas comprises a gaseous material having a solubility less than that of air in the aerated foodstuff product.

3. The method of Claim 1 or 2, further comprising a shearing unit intermediate the gas injection location and the product density measurement location and in fluid communication with both, wherein the product density measurement is obtained on the aerated foodstuff product at a location sufficiently downstream of the aeration gas injection location such that the product is in an equilibrated state when the density is measured.

4. The method of any one of Claims 1 to 3, further comprising measuring a density of formulation starter materials used in the preparation of the aerated foodstuff product at respective locations upstream of the shearing unit, determining the impact of the measured density of the formulation starter materials on the predicted product density and making an adjustment in the introduction rate of the aeration gas calculated to prevent or reduce change in the product density due to the difference.

5. The method of any one of Claims 1 to 4, further comprising obtaining a product density measurement on the aerated foodstuff product at a location sufficiently downstream of the shearing unit used in forming the aerated foodstuff product such that the product is in an equilibrated state, and making an adjustment in an introduction rate of an aeration gas at a location upstream of the shearing unit wherein the adjustment is calculated to reduce any difference between the predetermined and measured product densities.

6. Method for controlling the density of a foodstuff to a predetermined level during continuous preparation thereof, comprising:
a) preselecting a product density set point;
b) preparing an edible base dispersion;
c) combining a gas introduced at a gas flow rate with the edible base dispersion to provide a gas/edible base dispersion combination;
d) mixing the gas/edible base dispersion combination in a mixing unit effective to distribute bubbles of the gas in the edible base dispersion, forming an aerated dispersion product;
e) outputting the aerated dispersion product in a flowable condition from the shearing unit into a passageway;
f) measuring product density of the dispersion product in the passageway at a location removed sufficient from the mixing unit such that the product is in an equilibrated state where the measuring is performed;
g) comparing the measured product density with the product density set point to determine if a deviation therebetween has occurred;
h) adjusting the gas feed rate in response to the measured density for a deviation determined in g), in an amount correlated to change the density of the aerated dispersion product to correspond with the preselected product density set point;
i) repeating f), g) and h), in that sequence, at least once.

7. The method of Claim 6, wherein the density measuring occurs at a location in the passageway wherein the dispersion product is under a pressure condition which is within +1 psig of atmospheric pressure outside the passageway.

8. The method of Claim 6 or 7, further comprising the passageway comprising a first portion fluidly connecting the mixing unit with a first holding vessel, and a second portion thereof fluidly connecting the first holding vessel with a second holding tank which supplies a filler, wherein the density measuring occurs in the second portion of the passageway.

9. The method of any one of Claims 6 to 8, wherein the density measuring is performed with a densitometer.

10. The method of Claim 9, wherein the densitometer is adapted to communicate with a controller, wherein the densitometer outputs a measurement signal indicating the magnitude of the equilibrated measured density to the controller, the controller adjusting the measurement and creating predicted adjusted densities, and the controller comparing the adjusted measurement signal received from the densitometer with the product density set point, and outputting a command signal to a gas control valve for the adjusting of the gas feed rate an amount predicted to minimize any deviation detected between the measured adjusted product density and the product density set point while accounting the changes in density to the formulation feed material.

11. The method of any one of Claims 6 to 10, wherein the gas comprising a gaseous material having a solubility in the dispersion product which is less than air.

12. The method of any one of Claims 6 to 10, wherein the gas comprising a gaseous material having a solubility in the dispersion product which is greater than air.

13. The method of any one of Claims 6 to 10, wherein the gas is selected from the group consisting of nitrogen, helium, air, and mixtures thereof.

14. The method of any one of Claims 6 to 11, or 13, wherein the gas comprises nitrogen.

15. The method of any one of Claims 6 to 14, wherein the base dispersion comprises a mixture comprising vegetable oil, egg, acidulent, sweetener, and water, and further comprising combining a starch composition with the base dispersion in the mixing unit.

16. The method of any one of Claims 6 to 15, wherein the aerated dispersion product comprises an aerated oil-in-water emulsion.

17. The method of Claim 16, wherein the emulsion is selected from the group consisting of mayonnaise, salad dressing, cheese, chocolate, cream cheese, and cream filling.

18. Method for controlling the density of a foodstuff to a predetermined level during continuous preparation thereof, comprising:
a) preselecting a product density set point;
b) preparing an edible base dispersion;
c) measuring edible base dispersion density;
d) combining a gas introduced at a gas flow rate with the edible base dispersion to provide a gas/edible base dispersion combination;
e) mixing the gas/edible base dispersion combination in a shearing unit effective to distribute bubbles of the gas in the edible base dispersion, forming an aerated dispersion product;
f) outputting the aerated dispersion product in a flowable condition from the mixing unit into a passageway,
g) measuring in-process product density of the aerated dispersion product in the passageway at a location removed sufficient from the mixing unit such that the product is in an equilibrated state where the measuring is performed;
h) packaging aerated dispersion product;
i) measuring product density of the packaged aerated dispersion product;
j) comparing the measured packaged product density to the measured in-process product density to determine a model offset;
k) adjusting the in-process product density setpoint with the model offset;
l) calculating a prediction horizon of in-process product densities from the adjusted in-process density;
m) adjusting the gas feed rate in response to the predicted in-process densities determined in 1) and the formulation feed material density in an amount correlated to change the density of the aerated dispersion product to correspond with the preselected density set point; and
n) repeating g) through m), in that sequence, at least once.

19. A system for implementing the memod of Claim 18 comprising:
a) an edible base dispersion feed line adapted to fluidly communicate with a shearing unit;
b) gas control valve adapted to combine a pressurized gas with the base dispersion in the base dispersion feed line at a controllable gas feed rate to form a gas/edible base dispersions combination;
c) the shearing unit operable to mix the gas/edible base dispersion combination effective to distribute bubbles of the gas in the edible base dispersion, forming an aerated dispersion product;
d) a passageway adapted to receive aerated dispersion product outputted from the shearing unit in a flowable condition;
e) a densitometer adapted to measure density of the dispersion product in the passageway, and operably installed on the passageway at location at which outputted aerated dispersion product is in an equilibrated condition; and
f) a controller adapted to:
i) store a preselected product density set point value,
ii) receive a density measurement signal sensed by the densitometer,
iii) compare a density measurement determined from the density measurement signal with the preselected product density set point value to determine if a deviation has occurred therebetween,
iv) adjust the gas feed rate in response to the measured density for a deviation determined in iii), in an amount correlated to change the density of the aerated dispersion product to correspond with the preselected product density set point; and
v) repeat ii), iii), and iv), in that sequence, at least once.

20. The system of Claim 19, wherein the passageway comprising a first portion fluidly connecting the shearing unit with a first holding vessel, and a second portion thereof fluidly connecting the first holding vessel with a second holding tank which supplies a filler, wherein the densitometer is located in the second passageway, and further comprising additional densitometers adapted to measure density of the further constituent(s) in constituent feed line(s) fluidly communicating with the shearing unit and output measurement signal(s) indicating the magnitude of the measured density(densities) of the further constituent(s) to the controller, and the controller operable to process the measurement signal(s) from the additional densitometer(s) with an adjusted in-process product density to output a command signal to the gas control valve for the adjusting of the gas feed rate to a level predetermined to offset any deviation predicted in the aerated dispersion product density.
